# EUROPÄISCHE PATENTSCHRIFT

(11) **EP 3 651 458 B1**
(45) Veröffentlichungstag und Bekanntmachung des Hinweises auf die Patenterteilung: **09.09.2020**
(21) Anmeldenummer: 18205082.3
(22) Anmeldetag: 08.11.2018
(51) Int. Cl.: H04N 13/239, H04N 13/271, H04N 17/00, G08B 13/196, H04N 5/367

(54) **SICHERE STEREOKAMERA UND VERFAHREN ZUM PRÜFEN DER FUNKTIONSFÄHIGKEIT DER BILDSENSOREN**
SECURE STEREO CAMERA AND METHOD FOR TESTING THE FUNCTIONALITY OF THE IMAGE SENSORS
CAMÉRA STÉRÉO SÉCURISÉE ET PROCÉDÉ DE VÉRIFICATION DE LA CAPACITÉ DE FONCTIONNEMENT DES CAPTEURS D'IMAGE

(43) Veröffentlichungstag der Anmeldung: 13.05.2020
(73) Patentinhaber: SICK AG, 79183 Waldkirch (DE)
(72) Erfinder: Schott, Michael, 79115 Freiburg (DE); Hofmann, Dr. Christoph, 79194 Gundelfingen (DE)

(56) Entgegenhaltungen:
- EP-A1- 2 053 868
- EP-A1- 2 818 824
- EP-B1- 2 202 994
- DE-A1-102010 024 666
- US-A1- 2015 244 952

## Beschreibung

Die Erfindung betrifft eine sichere Stereokamera und ein Verfahren zum Prüfen der Funktionsfähigkeit der Bildsensoren einer Stereokamera nach dem Oberbegriff von Anspruch 1 beziehungsweise 13.

3D-Sensoren oder 3D-Kameras nehmen im Gegensatz zu einer üblichen zweidimensionalen Kamera Bilder auf, die in ihren Pixeln einen Abstandswert enthalten. Diese tiefenaufgelösten oder dreidimensionalen Bilddaten werden auch als Tiefenkarte bezeichnet. Der im Vergleich zu einer zweidimensionalen Bilderfassung höhere Geräte- und Auswertungsaufwand zur Erzeugung von dreidimensionalen Bilddaten wird in vielen Anwendungen durch die Zusatzinformationen gerechtfertigt. Es existieren zahlreiche 3D-Verfahren, beispielsweise Bildsensoren mit Lichtlaufzeitmessung in ihren Pixeln, Triangulationsverfahren zwischen mehreren Bildern oder zu einem bekannten projizierten Beleuchtungsmuster oder auch Laserscanner mit Scanmechanismen in zwei Achsen.

Ein besonders bekanntes, auf Triangulation beruhendes 3D-Verfahren ist die an das menschliche Sehen mit zwei Augen angelehnte Stereoskopie. Zwei Kameras nehmen ein Bildpaar derselben Szenerie aus unterschiedlicher Perspektive auf. In einem als Disparitätsbereich bezeichneten Suchbereich, der in der Regel durch ein Korrelationsfenster festgelegt ist, werden zueinander korrespondierende Pixel beziehungsweise Bildmerkmale identifiziert. Deren gegenseitiger Versatz oder Disparität stellt ein Maß für die Entfernung dar, so dass in Kenntnis der optischen Parameter der Stereokamera die jeweilige Entfernung berechnet werden kann. Der Zusammenhang zwischen der Entfernung eines Objekts und der zugehörigen Disparität ist nicht linear, sondern hyperbelförmig. Der Disparitätsbereich entspricht dem erfassbaren Entfernungsbereich einer Stereokamera. Stereosysteme können passiv, also allein mit dem Umgebungslicht arbeiten, oder eine eigene Beleuchtung aufweisen, die vorzugsweise ein Beleuchtungsmuster erzeugt, um die Entfernungsschätzung auch in strukturlosen Szenerien zu ermöglichen.

Stereokameras werden auch in sicherheitstechnischen Anwendungen eingesetzt. Das primäre Ziel ist dann, Personen vor Gefahrenquellen zu schützen, wie sie beispielsweise Maschinen im industriellen Umfeld darstellen. Die Maschine wird mit Hilfe der Stereokamera und möglicherweise weiteren Sensoren überwacht, und wenn demnach eine Situation vorliegt, in der eine Person gefährlich nahe an die Maschine zu gelangen droht, wird eine geeignete Absicherungsmaßnahme ergriffen. Ein gängiges Absicherungskonzept sieht vor, dass Schutzfelder konfiguriert werden, die während des Betriebs der Maschine vom Bedienpersonal nicht betreten werden dürfen. Erkennt der Sensor einen unzulässigen Schutzfeldeingriff, etwa ein Bein einer Bedienperson, so löst er einen sicherheitsgerichteten Halt der Maschine aus. Es sind auch Alternativen zu Schutzfeldern bekannt, etwa darauf zu achten, dass zwischen Maschine und Person ein von der Relativbewegung abhängiger Mindestabstand eingehalten ist ("speed and separation monitoring").

Im Sinne der Sicherheitstechnik müssen sichere Sensoren besonders zuverlässig arbeiten und deshalb hohe Sicherheitsanforderungen erfüllen, beispielsweise die Norm EN13849 für Maschinensicherheit und die Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder Überwachung der Verschmutzung optischer Bauteile.

Für eine Stereokamera ist die Funktionsfähigkeit der Bildsensoren eine Grundvoraussetzung. Die aktuell aufgenommene Bildinformation muss den äußeren Verhältnissen entsprechen. Das ist nicht ohne weiteres feststellbar, da ein konstantes Bild sowohl Ausdruck einer unveränderten Szenerie als auch eine Fehlfunktion eines Bildsensors sein kann. Es gibt eine Vielzahl möglicher Bildsensorfehler, die zuverlässig aufzudecken sind. Dazu zählen sogenannte "Stuck-At"-Fehler, bei denen Pixel trotz unterschiedlichen Szenerien immer denselben Pixelwert angeben. Ein Sonderfall davon sind die sogenannten Salt-and-Pepper-Fehler, bei denen ein Pixel komplett saturiert (weiß, Salt) oder ganz dunkel bleibt (schwarz, Pepper). Aufgrund der Analogschaltung können auch solche Stuck-At-Pixel noch leicht rauschen. Eine andere Fehlerquelle sind Zeilen- oder Spaltenvertauschungen beim Auslesen, wo dann der Bildkontext gestört ist. Allgemeiner kann es auch dazu kommen, dass irgendwelche Adresszuordnungen nicht stimmen und das Bild wie zerhackt erscheint. Ein Effekt wie von defekten Pixeln kann auch ohne elektronische Ursache durch Verschmutzung der Bildsensoren oder einer ihnen zugeordneten Optik, etwa von Mikrolinsen auf dem Bildsensor, eines Empfangsobjektivs oder einer schützenden Frontscheibe entstehen.

In der EP 1 472 890 B1 wird zum Überprüfen der Funktionssicherheit eines Bildsensors ein aktuelles Rauschmaß der Pixel mit einem Referenzrauschmaß verglichen. Ein solcher Test ist aber nicht aussagekräftig genug, weil auch ein defektes Pixel ein den Erwartungen entsprechendes Rauschen zeigen kann.

Die US 8 953 047 B2 sieht in den Bildsensor integrierte Verifikationsschaltungen vor. Dies macht den Bildsensor aber entsprechend aufwändiger in der Herstellung, und die zusätzlichen Schaltungsteile beanspruchen Fläche auf dem Bildsensor.

Die DE 10 2014 201 161 A1 befasst sich mit einem Verfahren zum Ermitteln eines blinden Bereichs einer Kamera. Dabei werden nacheinander aufgenommene Bilder einer dynamischen Szenerie aufgenommen und ein blinder Bereich dort vermutet, wo sich die Bilder nicht verändern. Dieses Verfahren ist für einen simultanen Test von Bildsensoren einer Stereokamera und eher statische Szenerien ungeeignet.

Aus der EP 1 367 314 B1 ist ein redundantes Kamerasystem mit zwei Kameras bekannt. Die beiden Kameras fungieren aber nicht als Stereokamera zur Erfassung von Tiefenkarten, sondern sind redundante 2D-Kameras. Der Sicherheitsansatz beruht allein auf der Zweikanaligkeit. Die Kameras erfassen über einen Strahlteiler identische Szenerien.

Die JP 2001211466 A offenbart ein Stereosystem mit einer Selbstdiagnosefunktion. Dazu werden Bildmerkmale in dem linken und dem rechten Bild gezählt, und wenn diese Anzahlen nicht übereinstimmen, wird ein Fehler vermutet. Das ist ein relativ grobes Vorgehen. Es ist leicht möglich, dass die Anzahl übereinstimmt, obwohl einzelne Bildmerkmale es nicht tun. Die Bestimmung von Bildmerkmalen kann auch nicht zugleich robust genug für den praktischen Einsatz und sensitiv für einzelne Pixelfehler sein.

In der EP 2 202 994 B1 werden von einer 3D-Kamera Teilbereiche der Tiefenkarte auf Veränderungen gegenüber deren vorab eingelernten Referenzpositionen untersucht. Damit werden aber keine Bildsensorfehler aufgedeckt, sondern es wird eine Kalibrierung der 3D-Kamera überwacht. Bildsensorfehler außerhalb der typischerweise kleinen Teilbereiche könnten so auch gar nicht bemerkt werden.

Nach der Lehre der US 9 712 768 B2 werden Adressdecoderfehler eines Bildsensors erkannt. Der Ansatz beruht darauf, dass Bildsensoren charakteristische Helligkeitsunterschiede der Pixel (FPN, Fixed Pattern Noise) zeigen. Das FPN eines aktuell aufgenommenen Bildes würde demgegenüber durch Fehlzuordnungen vermischt. Allerdings ist dann das FPN von dem eigentlichen Bild überlagert und nicht mit ausreichender Zuverlässigkeit bewertbar. Solche Adressdecoderfehler sind aber für eine Stereokamera besonders relevant, weil durch Vertauschen von Pixelwerten in Korrelationsrichtung falsche Entfernungen geschätzt werden.

Aus der DE 10 2010 024666 A1 ist eine Stereokamera mit Selbstdiagnose bekannt. Sie zählt anfangs, wieviele Pixel der Tiefenkarte keinen gültigen Disparitätswert enthalten. Fällt diese Anzahl dann im Betrieb zu stark ab, wird eine Fehlermeldung ausgegeben.

Z Aus der EP 2 818 824 A1 ist ein 3D-Sensor zum Erkennen von Objekten innerhalb eines vorgegebenen Detektionsfeldes bekannt. Objekte innerhalb des Detektionsfeldes werden anhand der Differenz einer Tiefenkarte mit einer Referenzkarte erkannt. Die Referenzkarte wird aus den vorgegebenen Detektionsfeldern erzeugt.

Es ist daher Aufgabe der Erfindung, die Fehlererkennung eines Bildsensors in einer Stereokamera zu verbessern.
Diese Aufgabe wird durch eine sichere Stereokamera und ein Verfahren zum Prüfen der Funktionsfähigkeit der Bildsensoren einer Stereokamera nach Anspruch 1 beziehungsweise 13 gelöst. Die Stereokamera ist sicher im Sinne der einleitend genannten oder vergleichbarer heutiger und zukünftiger Normen, d.h. alle funktionswesentlichen Komponenten sind gemäß einem spezifizierten Sicherheitsniveau ausfallsicher, beziehungsweise deren Fehlfunktion wird erkannt.

Die Stereokamera weist mindestens zwei Bildsensoren oder Einzelkameras zur Erzeugung von zwei gegeneinander perspektivisch versetzt aufgenommenen zweidimensionalen Bildern auf. Aus den jeweiligen Bildpaaren wird durch Anwendung eines Stereoalgorithmus' zur Schätzung von Disparitäten korrespondierender Bildmerkmale eine Tiefenkarte erzeugt. In einer Einlernphase vor dem eigentlichen Betrieb, beispielsweise während der Montage oder Inbetriebnahme, wird der Hintergrund des Überwachungsbereichs als Referenztiefenkarte aufgenommen, und damit werden dann später im Betrieb die aufgenommenen Tiefenkarten vergleichen.

Als ein Baustein dafür, die Stereokamera sicher auszugestalten, wird die Funktionsfähigkeit der Bildsensoren überprüft, um Ausfälle und Fehler zu detektieren. Die

Bildsensoren sind bevorzugt handelsübliche Bildsensoren ohne besondere Redundanzen, Verifikationsschaltungen oder dergleichen. Die Bildsensoren sind demnach, isoliert und für sich betrachtet, keine sicheren Bildsensoren, die Sicherheit ergibt sich erst durch die Funktionsprüfung und mögliche weitere Sicherheitsmaßnahmen.

Die Erfindung geht von dem Grundgedanken aus, einen Fehler dadurch zu erkennen, dass Entfernungswerte in den Bildpunkten der Tiefenkarte systematisch von der eingelernten und im Betrieb weiterhin als Hintergrund beobachteten Szenerie abweichen. Um das herauszufinden, wird ein statistisches Maß der Abweichungen zwischen aufgenommener Tiefenkarte und Referenztiefenkarte für zumindest einen Teil der Bildpunkte gebildet. Da die Bildpunkte einer Tiefenkarte Tiefenwerte enthalten, also Abstände oder Entfernungen, ist das ein Mittelwert über Abstände von der Kamera oder ein in andere Koordinaten umgerechnetes Abstandsmaß, etwa eine Höhe über dem Boden. Es wird ein Adressdecoderfehler vermutet, wenn das statistische Maß signifikant von dem Referenzwert abweicht.

Eine statistische Betrachtung ist deshalb erforderlich, weil der Tiefenwert in einzelnen Bildpunkten aufgrund von Rauscheffekten variiert. Es soll vorzugsweise schon die kleinste denkbare Adressverschiebung um ein Pixel beziehungsweise eine Spalte oder Zeile der Bildsensoren erkannt werden, und die dadurch verursachte Änderung der Tiefenwerte liegt unter realistischen Bedingungen noch deutlich im Rauschband eines einzelnen Bildpunktes der Tiefenkarten. Eine Auswertung auf Ebene einzelner Bildpunkte, auch noch kleinerer Gruppen weniger Bildpunkte würde also fortlaufend Fehlalarme erzeugen, in denen Rauschen fälschlich als Bildsensordefekt diagnostiziert wurde. Erst bei ausreichend großer Zahl von Bildpunkten und/oder Messwiederholungen wird ein systematischer Einfluss eines Defekts mit ausreichender Verlässlichkeit vom üblichen Rauschen unterschieden.

Die Erfindung hat den Vorteil, dass Adressdecoderfehler und im selben Zuge womöglich auch weitere Fehler der Bildsensoren verlässlich aufgedeckt werden. Somit wird verhindert, dass die Stereokamera Distanzen falsch berechnet oder Objekte übersieht, was sehr leicht zu kritischen Situationen führen würde. Die Referenztiefenkarte und der Vergleich damit werden üblicherweise ohnehin und unabhängig von einem Bildsensortest für die Erfassung von Vordergrundobjekten benötigt. Deshalb kommen dafür keine zusätzlichen Einricht- oder Auswertungsschritte hinzu. Die Prüfeinheit kann sehr effizient beispielsweise auf einem FPGA (Field Programmable Gate Array) implementiert werden.

Die Auswertungseinheit ist bevorzugt dafür ausgebildet, eine Differenztiefenkarte aus der aufgenommenen Tiefenkarte und der Referenztiefenkarte zu bilden. Es werde also die Abstandswerte der Referenztiefenkarte von der jeweils aufgenommenen Tiefenkarte abgezogen. Die Differenztiefenkarte ist eine gut handhabbare Repräsentation der Abweichungen zwischen Tiefenkarte und Referenztiefenkarte, und sie wird in vielen Stereokameras ohnehin gebildet, um den Hintergrund zu berücksichtigen.

Die Prüfeinheit ist bevorzugt dafür ausgebildet, als statistisches Maß einen Mittelwert, einen Median oder ein anderes Quantil zu bilden. Im Folgenden wird an manchen Stellen nur der Mittelwert diskutiert, die Beschreibung überträgt sich dann aber direkt auf andere statistische Maße. Das statistische Maß wird besonders einfach aus Bildpunkten der Differenzkarte oder zumindest einem Teil der Bildpunkte bestimmt. Da in der Differenztiefenkarte die Referenztiefenkarte bereits abgezogen ist, wird vorzugsweise ein Referenzwert Null erwartet, jedenfalls für alle Bildpunkte, die tatsächlich den Hintergrund und nicht ein erst im Betrieb hinzugekommenes Objekt beobachten. Der aufgrund eines Adressdecoderfehlers verschobene Bildpunkt oder Bereich von Bildpunkten wird auf diese Weise nicht oder nur grob innerhalb der das statistische Maß bildenden Bildpunkte lokalisiert, aber eine binäre Erkennung genügt schon für den Funktionstest. Anstatt die Differenzkarte wirklich zu berechnen und zu speichern, kann aber alternativ auch lediglich ein Vergleich zwischen Tiefenkarte und Referenztiefenkarte erfolgen.

Die Stereokamera weist bevorzugt einen Sicherheitsausgang auf, wobei die Prüfeinheit dafür ausgebildet ist, über den Sicherheitsausgang ein Absicherungssignal auszugeben, wenn die Funktionsfähigkeit eines Bildsensors nicht gegeben ist. Das Absicherungssignal wird beispielsweise von einer Sicherheitssteuerung oder direkt einer überwachten Maschine empfangen und versetzt eine überwachte Maschine in einen sicheren Zustand. Der Sicherheitsausgang ist normgerecht ausgebildet, also beispielsweise zweikanalig und/oder regelmäßig durch Testsignale überprüft. Darüber wird bestimmungsgemäß ein Absicherungssignal ausgegeben, wenn die Stereokamera eine Gefahr entdeckt, also beispielsweise einen unzulässigen Eingriff in ein Schutzfeld oder einen unterschrittenen Sicherheitsabstand, der wiederum in Abhängigkeit von der Geschwindigkeit definiert sein kann (Speed-and-Separation). Eine solche sicherheitsgerichtete Reaktion sollte aber auch erfolgen, wenn Fehler der Bildsensoren erkannt sind und damit die Funktionsfähigkeit nicht mehr garantiert ist.

Die Prüfeinheit ist bevorzugt dafür ausgebildet, nur Abweichungen des statistischen Maßes beziehungsweise Mittelwerts hin zu größeren Abständen von der Stereokamera als Fehler zu erkennen. Es werden demnach nur aufgrund eines Adressdecoderfehlers zu groß gemessene Abstände als sicherheitskritisch angesehen. Das könnte nämlich dazu führen, dass ein Objekt fälschlich als Hintergrund eingestuft und damit nicht erkannt wird, und das ist ein sicherheitsrelevanter Fall. Eine zu nah gemessene Entfernung umgekehrt wäre nicht sicherheitskritisch. Damit wird eventuell ein Objekt erkannt, das es real nicht gibt oder das zum Hintergrund gehört, oder es wird einem Objekt in der Zentralperspektive der Stereokamera ein zu großer Abschattungsbereich zugeordnet, der vorsichtshalber dem Objekt zugeschlagen werden muss, weil sich darin ein weiteres Objekt verbergen könnte. Damit droht zwar eine unnötige sicherheitsgerichtete Reaktion mit entsprechenden Stillstandzeiten, aber jedenfalls kein Unfall. Um die Verfügbarkeit zu optimieren, ist in einer weiteren bevorzugten Ausführungsform denkbar, auch Abweichungen des statistischen Maßes hin zu kleineren Abständen als Fehler eines Bildsensors zu erkennen. Das würde dann aber eine schwächere Maßnahme nach sich ziehen, beispielsweise eine Wartungsanforderung, das System ist weiterhin sicher und einsatzfähig.

Die Prüfeinheit ist bevorzugt dafür ausgebildet, das statistische Maß beziehungsweise den Mittelwert mit einem Schwellwert zu vergleichen. Ein Schwellwert ist ein sehr kompaktes Maß dafür, welche Schwankungen des statistischen Maßes noch als üblich und tolerierbar und welche als Adressdecoderfehler anzusehen sind. Mit einem Schwellwert nahe bei dem Referenzwert werden vermehrt Bildsensorfehler erkannt, die tatsächlich nicht vorliegen (falsch-positiv), umgekehrt mit einem Schwellwert weit von dem Referenzwert Bildsensorfehler übersehen (falsch-negativ). Die Festlegung des Schwellwerts kann daher im Rahmen der Sicherheitsbetrachtung und Systemauslegung unter Austarieren der beiden Fehlertypen erfolgen. Es ist im Rahmen der Sicherheitstechnik etwas überraschend, dass hier vorzugsweise eher eine Minimierung der Falsch-Positiv-Rate angestrebt wird. Ein Falsch-Positiv-Ereignis bedeutet nämlich, dass eine an sich funktionsfähige Stereokamera für erhebliche Stillstandzeiten bis zu deren Wartung beziehungsweise Austausch sorgt, und das wird in der Praxis an einer Anlage nicht toleriert. Bei einer falsch-negativen Beurteilung wird zwar ein sicherheitsrelevanter Defekt zunächst übersehen, aber diese Fehleinschätzung ist ein Rauscheffekt und mit den folgenden Zyklen der Prüfeinheit unkorreliert. Der Fehler wird also aufgedeckt, nur etwas später, und bis dahin ist das System auch nicht ausgefallen, sondern arbeitet lediglich mit einem gewissen, noch unentdeckten Messfehler. In der Gesamtbetrachtung bedeutet das noch keinen Ausfall der Sicherheit, wobei die mögliche Verzögerung der Fehleraufdeckung natürlich im Sicherheitskonzept Berücksichtigung finden muss. Ein weiterer Aspekt bei der Schwellwertfestlegung sind Puffer für Toleranzen, wie Temperaturverschiebungen und dergleichen.

Die Prüfeinheit ist bevorzugt dafür ausgebildet, das statistische Maß beziehungsweise den Mittelwert über mehrere nacheinander aufgenommene Tiefenkarten zu bilden. Aus den aufgenommenen Tiefenkarten wird jeweils durch Abziehen der Referenztiefenkarte eine aufgenommene Differenztiefenkarte gebildet. Durch die statistische Betrachtung beziehungsweise Mittelung über mehrere Aufnahmen oder Frames wird die statistische Basis verbreitert. Das statistische Maß wird also ein verlässlicherer Indikator für Bildsensorfehler, es ist insgesamt weniger vom Rauschen in einzelnen Momenten geprägt. Es ist möglich, eine erforderliche Anzahl von Wiederholungen, also nacheinander aufgenommenen Tiefenkarten anzugeben, ab der die Verteilungen schmal genug werden, damit zufällige Abweichungen bei intakten Bildsensoren einerseits und bei minimal defekter Adressdecodierung andererseits nur noch mit einer spezifizierten Seltenheit auftreten. Dabei bedeutet eine minimal defekte Adresscodierung beispielsweise eine Verschiebung um ein Pixel oder eine Spalte der Bildsensoren. Es können Anteile für die oben schon diskutierten falsch-positiven und falsch-negativen Funktionstestergebnisse eine Rolle spielen. Die Anzahl erforderlicher Wiederholungen kann von der Anzahl der Bildpunkte abhängen, aus denen ein statistisches Maß innerhalb einer Aufnahme gebildet wird, denn beispielsweise im Extremfall nur eines Bildpunktes wären ungleich mehr Wiederholungen erforderlich als bei einer großen Zahl betrachteter Bildpunkte.

Die Auswertungseinheit ist bevorzugt dafür ausgebildet, die Referenztiefenkarte aus mehreren Aufnahmen zu erzeugen. Damit wird ein verlässlicher Ausgangspunkt für den Bildsensortest und auch die Objektdetektion gefunden. Da die Referenztiefenkarte nur einmalig in der Einlernphase bestimmt wird, kann auch über eine sehr große Anzahl von Aufnahmen gemittelt werden, damit Rauscheffekte möglichst weitgehend unterdrückt oder jedenfalls mit verlässlich bestimmten Maßen wie der Standardabweichung bekannt sind.

Die Prüfeinheit ist bevorzugt dafür ausgebildet, für das statistische Maß beziehungsweise den Mittelwert Bildpunkte nicht zu berücksichtigen, die einem Vordergrundobjekt zugeordnet werden. Der Funktionstest basiert auf einem Vergleich mit dem über die Referenztiefenkarte eingelernten Hintergrund. Bereiche, in denen schon bekannt ist, dass sie nicht mehr dem Hintergrund entsprechen, würden daher den Funktionstest nur verschlechtern, indem das statistische Maß systematisch verkleinert, also zu der Stereokamera hin gezogen würde. Dabei werden für die Erfassung von Vordergrundobjekten vorzugsweise zusätzliche Informationen herangezogen, wie eine Historie (Objekt Tracking), Nachbarschaftsbeziehungen beziehungsweise eine Segmentierung in Objekte und dergleichen. Prinzipiell könnte ein Bildpunkt fälschlich als Vordergrund eingestuft werden, weil ein Hintergrundobjekt aufgrund eines Adressdecoderfehlers zu nahe gemessen wurde. Das ist aber nicht sicherheitskritisch, weil ja solche falschen Vordergrundpixel wie Objekte behandelt und daher geschützt werden. Dies wurde oben schon im Zusammenhang mit Adressdecoderfehlern hin zu nahen Abständen diskutiert.

Die Prüfeinheit ist bevorzugt dafür ausgebildet, ein statistisches Maß beziehungsweise einen Mittelwert jeweils über eine Spalte von Bildpunkten oder einen Teilbereich davon zu bilden. Dabei wird ohne Beschränkung der Allgemeinheit davon ausgegangen, dass die Stereokorrelation zeilenweise arbeitet, das statistische Maß wird also senkrecht zur Korrelation beziehungsweise Disparitätsschätzung gebildet. Bei einer spaltenweisen Korrelation wird folglich zeilenweise ein statistisches Maß gebildet, dieser Fall sowie noch weitere abweichende Korrelationsrichtungen sollen mit umfasst sein. Ein in diesem Sprachverständnis über Spalten gebildetes statistisches Maß ist besonders geeignet für die Aufdeckung relevanter Fehler in einer Stereokamera, weil ein Fehler des Adressdecoders, der Spalten eines Bildsensors vertauscht oder verändert, die Disparitätsschätzung und somit sämtliche Tiefenwerte systematisch verschiebt, die mit einer betroffenen Spalte bestimmt werden. Ein statistisches Maß über eine betroffene Spalte enthält daher für diesen Fehlerfall in allen Bildpunkten dieser Spalte den Fehler, der daher auch das statische Maß prägt und nicht von Bildpunkten anderer, nicht betroffener Spalten verwässert wird.

Die Prüfeinheit ist bevorzugt dafür ausgebildet, je Spalte von Bildpunkten die gültigen Bildpunkte zu zählen und deren Tiefenwert aufzuaddieren. Das ist eine einfache Implementierung, um nacheinander die Größen zu akkumulieren, die den Mittelwert bestimmen. Daraus kann der Mittelwert gebildet werden, der nämlich der Quotient dieser Größen ist, aber es ist äquivalent und vermeidet die in einem FPGA ungünstige Division, stattdessen das Produkt der Anzahl gültiger Bildpunkte und des Schwellwerts mit der Summe der Tiefenwerte zu vergleichen.

Die Prüfeinheit ist bevorzugt dafür ausgebildet, einen Fehler zu erkennen, wenn die Anzahl gültiger Bildpunkte in einer Spalte zu klein ist. Diese Bedingung wird vorzugsweise erst nach Mittelung über mehrere Aufnahmen beziehungsweise Frames geprüft. Wird dann das statistische Maß immer noch nicht von einer ausreichenden Anzahl Bildpunkte gebildet, so ist der Funktionstest nicht in der Lage, eine verlässliche Aussage zu treffen. Das wiederum kann als eigener Fehler gemeldet werden, der weniger schwerwiegend ist als die tatsächliche Erkennung eines defekten Bildsensors. Grund für die vielen ungültigen Pixel kann beispielsweise ein großes Objekt vor der Stereokamera sein, welches in einer Spalte zu viele Bildpunkte des Hintergrundes verdeckt, so dass diese Spalte während der Verweildauer des Objekts nicht geprüft werden kann. Hält dieser Zustand aber länger an als die geforderte Zeit, nach der eine Funktionsfähigkeit der Bildsensoren bestätigt sein muss, so kann nach der zunächst nicht sicherheitskritischen Fehlermeldung doch auch eine sicherheitsgerichtete Reaktion ausgelöst werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Darstellung einer Stereokamera;
- Fig. 2: eine schematische Ansicht beispielhafter zweidimensionaler Bilder, die mit zwei Bildsensoren einer Stereokamera aus versetzter Perspektive aufgenommen wurden;
- Fig. 3: eine beispielhafte Darstellung von Verteilungen von Mittelwerten gemessener Abstände in den einzelnen Bildpunkten einer Tiefenkarte, um die Auslegung von Schwelle und Anzahl Messwiederholungen zu erläutern; und
- Fig. 4: ein Ablaufdiagramm eines beispielhaften Funktionstests der Bildsensoren mit Mittelwertbildung über die Spalten der Tiefenkarten.

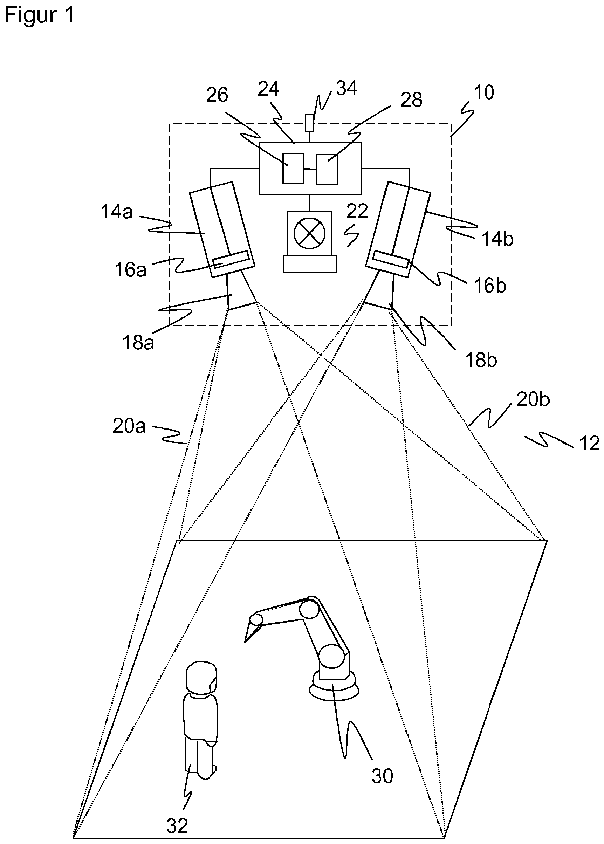

Figur 1 zeigt in einer schematischen dreidimensionalen Darstellung den allgemeinen Aufbau einer sicheren Stereokamera 10 zur Aufnahme einer Tiefenkarte. Die dargestellte Stereokamera 10 ist fest montiert, und zwar in Figur 1 von oben, was oft vorteilhaft ist und auch an manchen Stellen in dieser Beschreibung die Sprache der geometrischen Beziehungen prägt. Dennoch kann die Stereokamera 10 ebenso seitlich, unten oder in beliebiger sonstiger Position und Orientierung angebracht sein.

Zur Erfassung eines Raumbereichs 12 sind zwei Kameramodule 14a-b der Stereokamera 10 in einem bekannten festen Abstand zueinander montiert und nehmen jeweils Bilder des Raumbereichs 12 auf. In jeder Kamera ist ein Bildsensor 16a-b vorgesehen, üblicherweise ein matrixförmiger Aufnahmechip, der ein rechteckiges Pixelbild aufnimmt, beispielsweise ein CCD- oder ein CMOS-Sensor. Es sind Farb- wie Monochromsensoren denkbar, insbesondere auch außerhalb des sichtbaren Spektrums wie Infrarot. Die Bildsensoren 16a-b können als "global shutter" oder "rolling shutter" ausgebildet sein. Den Bildsensoren 16a-b ist je ein Objektiv 18a-b mit einer abbildenden Optik zugeordnet, welche in der Praxis als jedes bekannte Abbildungsobjektiv realisiert sein können. Der maximale Sichtwinkel dieser Optiken ist in Figur 1 durch gestrichelte Linien dargestellt, die jeweils eine Sichtpyramide 20a-b bilden. Die Darstellung als jeweils eigene Kameras 14a-b soll lediglich das Prinzip einer Stereokamera 10 illustrieren. Praktisch können die Bildsensoren 16a-b samt Objektiv 18a-b ebenso in einem gemeinsamen Gehäuse untergebracht sein.

Zwischen den beiden Bildsensoren 16a-b ist eine Beleuchtungseinheit 22 vorgesehen, um ein strukturiertes Muster in den Raumbereich 12 zu projizieren. Die Stereokamera 10 ist demnach für aktive Stereoskopie ausgebildet, bei der das Muster auch einer an sich strukturlosen Szenerie überall auswertbare Kontraste aufprägt. Alternativ ist keine oder eine homogene Beleuchtung vorgesehen, um die natürlichen Objektstrukturen im Raumbereich 12 auszuwerten, was aber häufig zu zusätzlichen Bildfehlern führt.

Mit den beiden Bildsensoren 16a-b und der Beleuchtungseinheit 22 ist eine Steuer- und Auswertungseinheit 24 verbunden. Die Steuer- und Auswertungseinheit 24 kann in verschiedenster Hardware implementiert sein, beispielsweise einem externen Standardcomputer, einem oder mehreren internen digitalen Bausteinen wie Mikroprozessoren, ASICs (Application Specific Integrated Circuit), FPGAs (Field Programmable Gate Array), GPUs (Graphics Processing Unit) oder Mischformen davon. Da das Erzeugen der Tiefenkarte und deren Auswertung sehr rechenintensiv ist, wird vorzugsweise eine zumindest teilweise parallele Architektur gebildet.

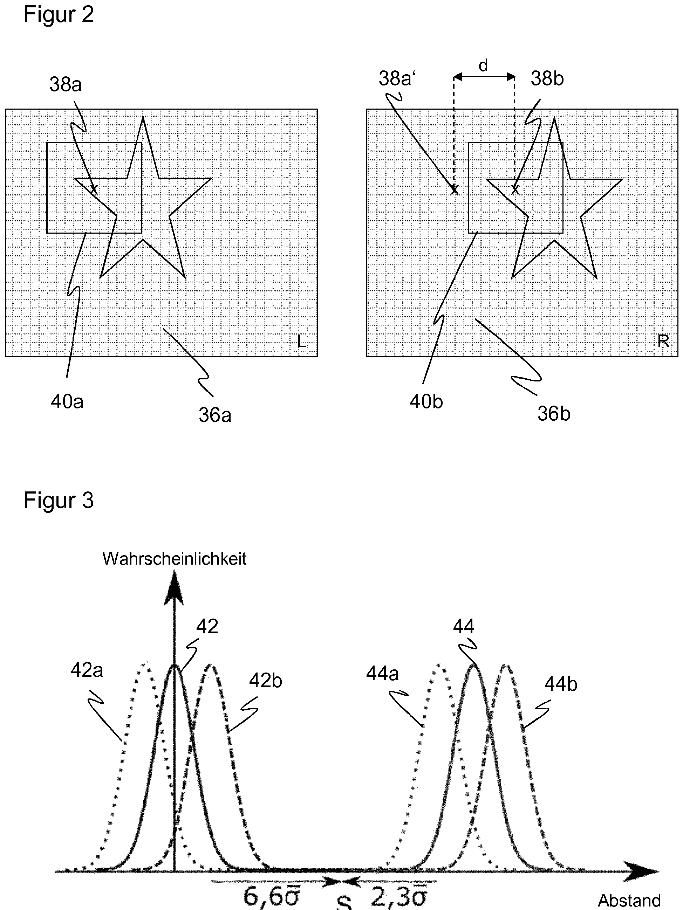

Die Steuer- und Auswertungseinheit 24 erzeugt mit Hilfe der Beleuchtungseinheit 22 das strukturierte Beleuchtungsmuster und empfängt Bilddaten der Bildsensoren 16a-b. Aus diesen Bilddaten berechnet eine Stereoskopieeinheit 26 der Steuer- und Auswertungseinheit 24 mit Hilfe einer stereoskopischen Disparitätsschätzung die dreidimensionalen Bilddaten beziehungsweise die Tiefenkarte des Raumbereichs 12. Eine Prüfeinheit 28 der Steuer- und Auswertungseinheit 24 ist dafür ausgebildet, die Funktionsfähigkeit der Bildsensoren 16a-b zu überprüfen. Das wird im Anschluss unter Bezugnahme auf die weiteren Figuren 2 bis 4 genauer erläutert. Die Stereoskopieeinheit 26 und die Prüfeinheit 28 sind nur zwei für die Erläuterung herausgehobene Funktionsblöcke der Steuer- und Auswertungseinheit 24. Die tatsächliche Hardwareimplementierung muss weder der Stereokorrelation noch der Funktionsüberprüfung eine gegenüber anderen Funktionen hervorgehobene Rolle geben, die Erfindung ist auf keine spezielle Verteilung der Funktionen auf die Hardwarebausteine der Steuer- und Auswertungseinheit 24 beschränkt.

Eine wichtige sicherheitstechnische Anwendung der Stereokamera 10 ist die Überwachung einer Gefahrenstelle 30, die in der Figur 1 durch einen Roboter symbolisiert ist. Dazu können in dem Raumbereich 12 Schutzfelder konfiguriert sein, welche die Gefahrenstelle 30 wie eine virtuelle Wand absichern. Allgemeiner formuliert ist die Aufgabe der Steuer- und Auswertungseinheit 24, rechtzeitig zu erkennen, wenn ein Objekt 32, insbesondere eine Person oder ein Körperteil, der Gefahrenstelle 30 auf unzulässige Weise zu nahe kommt. Bei derartigen kritischen Ereignissen wird ein sicherheitsgerichtetes Absicherungssignal ausgelöst und über einen sicheren Ausgang 34 (OSSD, Output Signal Switching Device) ausgegeben, um beispielsweise den Roboter anzuhalten. Alternativ werden über den sicheren Ausgang 34 aus der Tiefenkarte gewonnene Informationen über Gefahrenstellen 30 und Objekte 32 ausgegeben, die dann extern im Hinblick auf mögliche Gefahren bewertet werden, insbesondere deren Abstand zueinander und womöglich weitere Parameter wie die Geschwindigkeit des Objekts 32. Die Stereokamera 10 ist für solche sicherheitstechnischen Anwendungen vorzugsweise sicher im einleitend erläuterten Sinne ausgebildet, wobei ein Aspekt davon die Funktionsüberprüfung der Bildsensoren 16a-b durch die Prüfeinheit 28 ist.

Um Objekte 32 zu detektieren, wird in einer Einlernphase der Hintergrund in dem Raumbereich 12 eingelernt. Es wird also vor dem Regelbetrieb in einem Grundzustand mindestens einmal eine Tiefenkarte des Raumbereichs 12 aufgenommen und als Referenztiefenkarte gespeichert. Vorzugsweise werden dafür viele nacheinander aufgenommene Tiefenkarten bildpunktweise gemittelt, um zeitliche Variationen zu beseitigen. Im Betrieb wird die Referenztiefenkarte von den jeweils aufgenommenen Tiefenkarten abgezogen, um den Vordergrund vom Hintergrund zu trennen, oder der Hintergrund wird auf andere Weise über die Referenztiefenkarte berücksichtigt, etwa indem Objekte einen Mindestabstand zu der Referenztiefenkarte einhalten müssen, weil sie andernfalls noch als Hintergrund behandelt werden. Es kann Bildpunkte geben, für die bereits während der Einlernphase in der Referenztiefenkarte und/oder im Betrieb in der Tiefenkarte kein verlässlicher Tiefenwert bestimmt werden kann, etwa weil keine Korrespondenz gefunden wird beziehungsweise eine geforderte Korrelationsgüte unterschritten wird. Solche Bildpunkte werden als ungültig markiert.

Der gesamte erfassbare Raumbereich 12 kann über eine Konfiguration eingeschränkt werden, beispielsweise um störende, gänzlich statische oder sicherheitstechnisch nicht relevante Bereiche auszublenden. Der nun beschriebene Funktionstest bezieht aber vorzugsweise die durch Konfiguration ausgeblendeten Bereiche mit ein. Ein Defekt auch außerhalb des konfigurierten Bereichs sollte gemeldet werden, weil das womöglich einen weiteren, dann sicherheitsrelevanten Ausfall indiziert.

Figur 2 zeigt rein schematisch ein Paar eines linken zweidimensionalen Bildes 36a und eines rechten zweidimensionalen Bildes 36b der beiden Bildsensoren 16a-b. Solche vorzugsweise simultan aus der versetzten Perspektive der Kameramodule 16a-b aufgenommenen Bildpaare verwendet die Stereoskopieeinheit 26 zur Erzeugung einer Tiefenkarte. Die Stereoskopieeinheit 26 verwendet einen an sich bekannten Stereokorrelationsalgorithmus. Dabei fungiert eines der zweidimensionalen Bilder, hier ohne Beschränkung der Allgemeinheit das linke Bild 36a, als Stützbild. Darin wird um ein jeweiliges Ausgangspixel 38a ein Fenster 40a gelegt, üblicherweise ein Rechteck oder sogar ein Quadrat. Es ist denkbar, nur einen Teil der Pixel in dem Fenster 40a zu beachten, etwa nur jedes i-te Pixel. In dem anderen, hier rechten Bild 36b wird nach einer Korrespondenz gesucht. Dazu wird ein entsprechendes Fenster 40b im rechten Bild 36a so lange gegen die Ausgangsposition bei einem Ausgangspixel 38a' des rechten Bildes 36b an der dem Ausgangspixel 38a des linken Bildes 36a entsprechenden Position verschoben, bis die Korrelationskosten minimal werden. Dieses Fenster 40b bester Korrelation um ein verschobenes Pixel 38b ist in Figur 2 gezeigt. Die erforderliche Translationsstrecke, nämlich der Abstand zwischen Ausgangspixel 38a' und verschobenem Pixel 38b, ist die gesuchte Disparität d, die anhand der Geometrie der Stereokamera 10 in eine Entfernung umgerechnet werden kann. Somit wird aus der Disparität d ein Abstandwert für einen dem Ausgangspixel 38a entsprechenden Bildpunkt einer Tiefenkarte bestimmt, und die gesamte Tiefenkarte entsteht durch Wiederholung der Bestimmung der Disparität für andere Ausgangspixel. Die Korrelation selbst ist recht aufwändig, und dafür sind verschiedene Algorithmen wie Census-Algorithmus, BRIEF (Binary Robust Independent Elementary Features), SIFT (Scale-invariant feature transform) oder FAST (Features from accelerated segment test) keypoint detector bekannt.

In Figur 2 sind die Bildsensoren 16a-b mit ihren Zeilen parallel zum Basisabstand ausgerichtet, so dass die Bildzeilen gerade die Epipolarlinien bilden, längs derer für die Korrelation verschoben wird. Diese Ausrichtung ist gerade für Echtzeitauswertungen besonders vorteilhaft, aber nicht zwingend. Sofern eine andere Ausführungsform der Stereokamera 10 abweichend nicht in Zeilenrichtung korreliert, sind die Begriffe Zeile und Spalte entsprechend der tatsächlichen Korrelationsrichtung zu verstehen.

Um die einwandfreie sicherheitstechnische Funktion der Stereokamera 10 zu gewährleisten, werden mittels der Prüfeinheit 28 Fehler der Bildsensoren 16a-b aufgedeckt. Das können Defekte in der Pixelmatrix sein, bei denen einzelne Pixel oder Gruppen von Pixeln falsche Daten liefern. Hier werden Defekte in der Adressierung betrachtet, also Adressdecoderfehler, die dazu führen, dass Bildinhalte verschoben oder vertauscht sind.

Ein besonders kritischer Fall für eine Stereokamera 10 ist eine horizontale Verschiebung von Bildern oder Bildbereichen aufgrund eines Adressdecoderfehlers. Wie aus Figur 2 ersichtlich, wirkt sich eine solche Verschiebung bei ansonsten intakten Bilddaten unmittelbar auf den geschätzten Wert für die Disparität d aus, es werden also in den betroffenen Bildpunkten falsche Abstände bestimmt. Bei einer Verschiebung des gesamten Bildes erhält die Tiefenkarte insgesamt einen Abstandsversatz. Werden nur Bildbereiche verschoben, so entsteht ein künstlicher Sprung in der Tiefenkarte, der aber von einer realen Objektkante in der Szenerie nicht zu unterscheiden ist. Somit werden Objekte an einer falschen Stelle oder gar nicht mehr erkannt, und das stellt ein sicherheitstechnisches Risiko dar. Es können Objekte 32 außerhalb eines Schutzfeldes erfasst werden, die sich in Wahrheit darin befinden, oder es werden bereits kritisch kleine Abstände zwischen Gefahrenstelle 30 und Objekt 32 überschätzt, und deshalb wird ein Unterschreiten eines Sicherheitsabstands nicht rechtzeitig erkannt.

Die Stereokamera 10 kennt den Hintergrund in der Szenerie beispielsweise in Form einer vorab eingelernten Referenztiefenkarte. Dieser Hintergrund wird im Betrieb nach dem Ruhestromprinzip ständig überwacht. Ein besonders kritischer Adressdecoderfehler liegt daher vor, wenn die Verschiebung von Bildbereichen zu überschätzten Abständen führen. Hierdurch kann es passieren, dass Objekte, die tatsächlich eine für Vordergrundobjekte geforderte Höhe über dem Hintergrund aufweisen, in den Hintergrund verschoben und dadurch nicht mehr als Vordergrundobjekt erkannt werden.

Erfindungsgemäß werden Adressdecoderfehler durch Vergleich der zur Laufzeit erzeugten Tiefenkarten mit der Referenztiefenkarte aufgedeckt. Die Tiefenkarten sollten sich nämlich in den Bereichen, in denen sie den Hintergrund aufnehmen und wo sich also keine Vordergrundobjekte befinden, nicht systematisch von der Referenztiefenkarte unterscheiden. Auch andere Ursachen als Adressdecoderfehler können zu ganz ähnlichem Verhalten führen, etwa mechanische Fehler. Das wird ebenso aufgedeckt, und eine Unterscheidung ist nicht notwendig, da in beiden Fällen der sichere Betrieb der Stereokamera 10 mehr gewährleistet ist.

Nun soll der Bildsensortest sensitiv und robust sein, also vorhandene Bildsensorfehler aufdecken und zugleich möglichst keine tatsächlich nicht vorhandenen Fehler melden. Es ist aber nicht unmittelbar möglich, kleine Verschiebungen um nur ein oder zwei Pixel zu erfassen, weil sie die Disparität und damit den Tiefenwert nur in einem geringfügigen Maße verändern, das noch im Bereich der Messfehler beziehungsweise im Rauschband liegt. Daher wird erfindungsgemäß der Mittelwert als statistisches Maß herangezogen, der über viele Bildpunkte und gegebenenfalls auch Messwiederholungen gebildet wird, um die Messunsicherheit zu reduzieren.

In einer konkreten bevorzugten Ausführungsform wird ein Bildpunktbereich der Tiefenkarte bestimmt, für den die Funktion geprüft werden soll. Das können sämtliche Bildpunkte der Tiefenkarte oder nur Ausschnitte davon sein. Von der Tiefenkarte wird bildpunktweise die Referenztiefenkarte abgezogen, und so entsteht eine Differenztiefenkarte. Bildpunkte, die in der Tiefenkarte oder der Referenztiefenkarte als ungültig markiert sind, weil sie keinen verlässlichen Tiefenwert enthalten, werden vorzugsweise ignoriert. Ebenso bleiben Bildpunkte unberücksichtigt, die als Teil eines Vordergrundobjekts erkannt wurden, da hier natürlich nicht erwartet werden kann, den vorab eingelernten Abstand zum Hintergrund wiederzufinden. Die Erkennung von Vordergrundobjekten basiert zwar im ersten Schritt auf deren Abstand vom Hintergrund, und soweit kann nicht trennscharf zwischen einem Bildsensorfehler, der ein Vordergrundobjekt vortäuscht, und einem tatsächlichen Vordergrundobjekt unterschieden werden. Durch Berücksichtigung des zeitlichen beziehungsweise örtlichen Kontexts können aber Vordergrundobjekte doch als solche bekannt sein. Ohnehin wäre es auch nicht sicherheitskritisch, wenn die Objekterkennung doch versagt und ein durch Bildsensorfehler verschobener Bereich als Objekt behandelt wird.

Über die verbleibenden Bildpunkte der Differenztiefenkarte wird jetzt ein Mittelwert gebildet und mit einem Schwellwert verglichen. Der ideale Erwartungswert liegt bei Null, da der Hintergrund beobachtet wird und genau dieser Hintergrund bereits über die Referenztiefenkarte abgezogen wurde. Der Schwellwert sollte allerdings etwas Abstand einhalten, um Toleranzen und statistische Schwankungen zu berücksichtigen. Die Auslegung des Schwellwerts wird später unter Bezugnahme auf die Figur 3 noch diskutiert.

Überschreitet der Mittelwert den Schwellwert, so liegt ein sicherheitskritischer Fehler vor, der eine sicherheitsgerichtete Reaktion der Stereokamera 10 nach sich zieht. Nach entsprechender Fehlermeldung an ein übergeordnetes System wird beispielsweise versucht, den Fehler über einen Neustart der Stereokamera 10 zu beseitigen. Die Fehlermeldung kann zugleich einen externen Service oder den Hersteller informieren, um Expertenunterstützung beim Wiederanlauf und gegebenenfalls sehr schnell eine Ersatzstereokamera mit entsprechender Parametrierung zu erhalten.

Ist der Mittelwert kleiner als der Schwellwert, so liegt kein sicherheitskritischer Fehler vor. Die Tiefenwerte sind entweder nicht systematisch verschoben oder jedenfalls nur in Richtung zu der Stereokamera 10 hin. Letzteres ist kein Sicherheitsproblem, der sicherheitskritische Fall ist ja, dass Objekte 32 im Hintergrund verschwinden. Trotzdem kann optional über eine weitere Schwelle auch geprüft werden, ob durch einen Adressdecoderfehler eine systematische Verschiebung in der nicht sicherheitskritischen Richtung vorliegt, denn auch das indiziert eine Wartung, weil der Fehler sich ausweiten könnte und auch so zumindest die Verfügbarkeit schon beeinträchtigt.

Figur 3 zeigt beispielhafte Verteilungen von Mittelwerten der gemessenen Abstände in den berücksichtigten Bildpunkten einer Tiefenkarte, anhand derer beispielhaft die Auslegung von Schwellwert und Anzahl Messwiederholungen für die Funktionsprüfung der Prüfeinheit 28 erläutert wird. Mit jeweils durchgezogener Linie ist auf der linken Seite eine erste Verteilung 42 um Null für intakte Bildsensoren 16a-b und auf der rechten Seite eine zweite Verteilung 44 bei einem minimalen aufzudeckenden Adressdecoderfehler gezeigt, also insbesondere bei einem Versatz um ein Pixel. Mit gepunkteter beziehungsweise gestrichelter Linie sind Verteilungen 42a-b, 44a-b eingezeichnet, die einer maximalen Verschiebung durch erwartete Toleranzen entsprechen. Solche Toleranzen entstehen beispielsweise durch Temperatureinflüsse und dergleichen.

Die Funktionsprüfung soll die beiden Fälle anhand eines gemessenen Mittelwerts unterscheiden können. Dazu wird beispielsweise ein Schwellwert S gesetzt. Dieser Schwellwert S hat jeweils zur Mitte der beiden Verteilungen 42, 44 einen definierten Abstand, über den die Fehler erster und zweiter Art beziehungsweise die falsch-positiven und falsch-negativen Ergebnisse der Funktionsprüfung austariert werden. Falsch-positiv heißt, dass ein Bildsensorfehler diagnostiziert wird, der in Wirklichkeit nicht vorliegt. Ein solcher Fehlalarm soll vorzugsweise nur äußerst selten auftreten, beispielsweise weniger als einmal über die Lebensdauer der Stereokamera 10. Im Beispiel der Figur 3 sind dafür 6,6 Standardabweichungen gewählt. Falsch-negativ dagegen bedeutet, dass ein vorhandener Bildsensorfehler nicht aufgedeckt wird. Hierfür ist im Beispiel der Figur 3 eine weniger scharfe Anforderung von nur 2,3 Standardabweichungen aufgestellt. Solche falsch-negativen Einschätzungen kommen also bewusst regelmäßig vor. Das betrifft aber jeweils nur den aktuellen Zyklus der Funktionsprüfung. Im nächsten Zyklus wird der Fehler dann mit nochmals der gleichen Wahrscheinlichkeit aufgedeckt, die Restwahrscheinlichkeit eines übersehenen Fehlers verschwindet nach wenigen Zyklen. Somit wird ein Bildsensorfehler mit etwas gegenüber einem einzelnen Zyklus der Funktionsprüfung verzögerter Ansprechzeit sicher erkannt. Bis dahin liegt in aller Regel auch noch kein Totalausfall vor. Die Anforderungen an falsch-negative Einschätzungen je Zyklus, Zykluslänge und Ansprechzeit sind im Rahmen der System- und Sicherheitsauslegung zu berücksichtigen.

Der Schwellwert S ist jeweils bezüglich der hinsichtlich Toleranzen ungünstigsten Verteilung 42b, 44a definiert. Er ist in Vielfachen der Standardabweichung angegeben, kann aber natürlich in eine herkömmliche oder auch interne Längeneinheit der Stereokamera 10 umgerechnet werden.

Die Verteilungen 42, 44 müssen schmal genug beziehungsweise die Standardabweichung klein genug sein, um die geforderte Trennschärfe des Schwellwerts S in Vielfachen der Standardabweichung bei dem gegebenen Abstand zwischen den Verteilungen 42, 44 auch zuzulassen. Eine schmale Verteilung lässt sich erzielen, indem viele Bildpunkte zur Mittelwertbildung herangezogen werden. In einer einzigen Tiefenkarte stehen möglicherweise nicht genug Bildpunkte zur Verfügung, sei es, weil zu viele Bildpunkte mangels verlässlicher Tiefenwertschätzung oder wegen durch ein Vordergrundobjekt verdeckten Hintergrunds ausgeschlossen wurden oder weil der zu betrachtende Ausschnitt der Tiefenkarte zu klein ist. Wenn so noch keine statistisch ausreichend sichere Aussage über das Vorliegen eines Bildsensorfehlers getroffen werden kann, so besteht die Möglichkeit, über die Bildpunkte aus mehreren nacheinander aufgenommenen Tiefenkarten zu mitteln. Das verlängert die Ansprechzeit der Funktionsprüfung, und wie weit das zulässig ist, muss im System- und Normungskontext entschieden werden. Wird beispielsweise zwingend eine Entscheidung nach einer definierten Zeit benötigt, kann die Anzahl der rechtzeitig für die Mittelwertbildung zur Verfügung stehenden Bildpunkte gezählt werden und eine sicherheitsgerichtete Reaktion der Stereokamera 10 erfolgen, wenn diese Anzahl innerhalb der geforderten Ansprechzeit keine zuverlässige Aussage ermöglich.

Die Anzahl verfügbarer Bildpunkte je Tiefenkarte und/oder Messwiederholungen mit Aufnahme weiterer Tiefenkarten bestimmen also die Breite der Verteilungen 42, 44 in Figur 3, beispielsweise gemessen als Standardabweichung. Es ist also möglich, die benötigte Anzahl unter Berücksichtigung der Toleranzen abzuschätzen und damit die Breite so einzustellen, dass die Toleranzen und die Summe der Abstände zum Schwellwert S, hier 6,6 und 2,3 Standardabweichungen, zwischen den Verteilungen 42, 44 Platz finden. Dabei wird die Anzahl vorteilhaft nicht größer gewählt als notwendig, um die Ansprechzeit zu minimieren, der Abstand zwischen der Mitte der ersten Verteilung 42b mit oberer Toleranz und der Mitte der zweiten Verteilung 44a mit unterer Toleranz wird also vorzugsweise nicht bei mindestens der Summe der zulässigen 3 Standardabweichungen eingestellt, hier 6,6+2,3, sondern gerade bei dieser Summe.

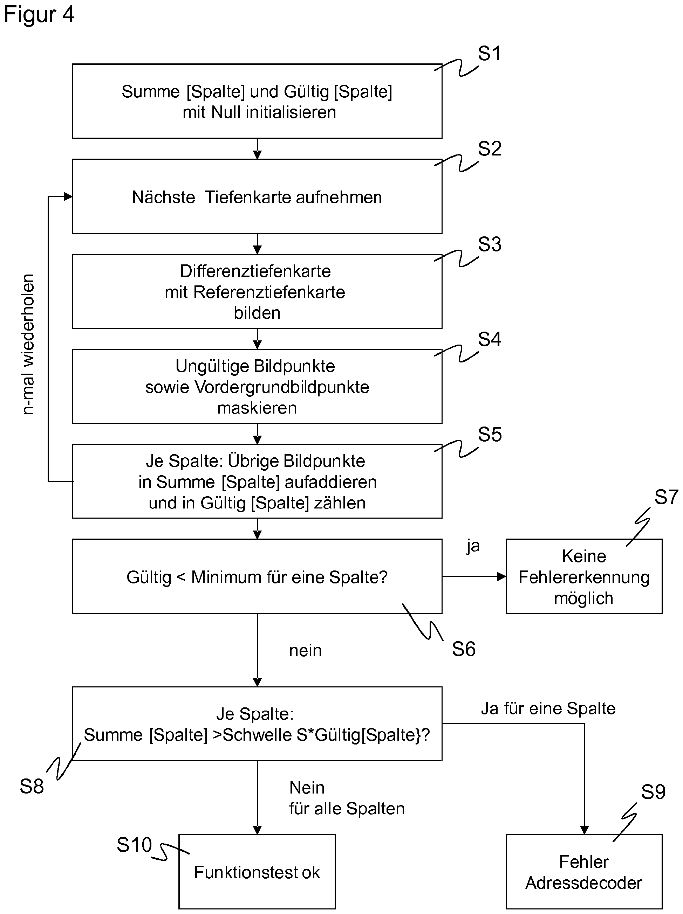

Figur 4 zeigt ein beispielhaftes Ablaufdiagramm des Funktionstests der Bildsensoren 16a-b. Dabei erfolgt die Mittelwertbildung und der Vergleich mit dem Schwellwert S vorteilhaft über die Spalten der Differenztiefenkarte. Wie schon erläutert, ist eine Verschiebung von Spalten durch einen Adressdecoderfehler besonders kritisch, weil sich das direkt auf die Disparitäten d und damit die gemessenen Tiefenwerte niederschlägt.

Außerdem ist dann bekannt, welche betroffen sind, so dass die Stereokamera 10 unter Umständen den Betrieb fortsetzt, solange keine sicherheitskritischen Bereiche ausgefallen sind. Das Ablaufdiagramm kann aber auch ganz analog für andere Ausführungsformen verstanden werden, wenn man jeweils den Begriff Spalte durch einen anderen Bildbereich ersetzt.

In einem Schritt S1 werden zwei Felder Summe [Spalte] und Gültig [Spalte] mit Null initialisiert, die jeweils für jede Spalte über die Bildbreite einen Wert aufnehmen. Das ist natürlich nur eine beispielhafte Implementierung.

In einem Schritt S2 wird eine neue Tiefenkarte aufgenommen. Sie wird auch der zu Figur 1 erläuterten Objektdetektion unterzogen, aber dieser Aspekt wird hier nicht weiter vertieft.

In einem Schritt S3 wird die Referenztiefenkarte von der Tiefenkarte abgezogen, um eine Differenztiefenkarte zu erhalten. Das erfolgt typischerweise auch für die Objektdetektion, und in diesem Fall wird die Differenzbildung vorzugsweise nur einmal vorgenommen und wechselseitig verwendet.

In einem Schritt S4 werden Bildpunkte ausmaskiert, die nicht für den Funktionstest genutzt werden sollen. Das sind zum einen ungültige Bildpunkte, für die in Referenztiefenkarte und/oder Tiefenkarte kein verlässlicher Abstandswert bestimmt werden konnte, und zum anderen Bildpunkte, die als zu einem Vordergrundobjekt gehörig erkannt wurden.

In einem Schritt S5 werden spaltenweise die verbleibenden Bildpunkte im zugehörigen Feld Summe [Spalte] aufaddiert und im Feld Gültig [Spalte] gezählt. Dadurch werden nach und nach Zähler und Nenner für eine spaltenweise Bestimmung des Mittelwerts akkumuliert.

Die Schritte S2 bis S5 werden n-fach wiederholt, beispielsweise über hundert Tiefenkarten. Um nicht jeweils die Aufnahme von n Tiefenkarten abwarten zu müssen, kann alternativ ein Ringpuffer verwendet werden, der jeweils die letzten n Tiefenkarten verwendet.

In einem Schritt S6 wird nun geprüft, ob in mindestens einer Spalte die Anzahl Gültig [Spalte] kleiner als ein Minimum geblieben ist, das für eine verlässliche Mittelwertbildung erforderlich ist. Ist das der Fall, so kann die Funktionsprüfung die Diagnose derzeit nicht verlässlich durchführen. In einem Schritt S7 wird entschieden, ob eine kritische Ansprechzeit überschritten wird, woraufhin eine sicherheitsgerichtete Reaktion erfolgt, oder ob beispielsweise noch mehr Wiederholungen der Schritte S2 bis S5 möglich sind. Das Minimum im Schritt S7 ergibt sich ebenso wie die Anzahl n der Wiederholungen der Schritte S2 bis S5 aus Anforderungen an die Breiten und Abstände der Verteilungen 42, 44 im Falle einer fehlerfreien Bildsensorfunktion und eines Defekts entsprechend den Überlegungen, die im Zusammenhang mit Figur 3 diskutiert wurden.

Gab es im Schritt S6 genügend gültige Pixel je Spalte, so findet nun in einem Schritt S8 spaltenweise der Vergleich mit dem Schwellwert S statt. Dazu könnte der Mittelwert als Quotient Summe [Spalte] / Gültig [Spalte] berechnet und direkt mit S verglichen werden. Gerade für ein FPGA ist eine Implementierung ohne Division günstiger, so dass hier beispielhaft der mathematisch äquivalente Vergleich zwischen Summe [Spalte] und S * Gültig [Spalte] durchgeführt wird.

Wird in einer Spalte der Schwellwert S überschritten, dann wird in einem Schritt S9 ein möglicher Adressdecoderfehler gemeldet, und sofern das nicht noch durch Zusatzmaßnahmen aufgefangen werden kann, wird auch eine sicherheitsgerichtete Reaktion ausgelöst.

Wenn der Schwellwert S andererseits für keine Spalte überschritten war, ist in einem Schritt S10 der Funktionstest mit dem Ergebnis abgeschlossen, dass kein Adressdecoderfehler vorliegt.

## Patentansprüche

1. Sichere Stereokamera (10) zur Überwachung eines Überwachungsbereichs (12), wobei sicher bedeutet, dass alle funktionswesentlichen Komponentengemäß einem spezifizierten Sicherheitsniveau ausfallsicher sind oder deren Fehlfunktion erkannt wird, wobei die Stereokamera (10) mindestens einen ersten Bildsensor (16a) zur Aufnahme eines ersten zweidimensionalen Bildes und einen zweiten Bildsensor (16b) zur Aufnahme eines zweiten zweidimensionalen Bildes des Überwachungsbereichs (12) aus gegeneinander versetzter Perspektive, eine Stereoskopieeinheit (26) zum Erzeugen einer Tiefenkarte aus zweidimensionalen Bildern nach dem Stereoskopieprinzip, eine Auswertungseinheit (24) zur Verarbeitung von Tiefenkarten sowie eine Prüfeinheit (28) zum Überprüfen der Funktionsfähigkeit der Bildsensoren (16a-b) durch Aufdecken von Adressdecoderfehlern und weiteren Fehlern der Bildsensoren aufweist, wobei die Auswertungseinheit (24) dafür ausgebildet ist, vorab in einer Einlernphase den Hintergrund des Überwachungsbereichs aufzunehmen und so eine Referenztiefenkarte des Überwachungsbereichs (12) zu erzeugen und im Betrieb eine aufgenommene Tiefenkarte mit der Referenztiefenkarte zu vergleichen, **dadurch gekennzeichnet,**
**dass** die Prüfeinheit (28) dafür ausgebildet ist, ein statistisches Maß über Abweichungen von Bildpunkten der Tiefenkarte zu der Referenzkarte zu bestimmen und anhand einer Abweichung des statistischen Maßes von einem Referenzwert einen Adressdecoderfehler und weitere Fehler in einem Bildsensor (16a-b) zu erkennen.

2. Stereokamera (10) nach Anspruch 1,
wobei die Auswertungseinheit (24) dafür ausgebildet ist, eine Differenztiefenkarte aus der aufgenommenen Tiefenkarte und der Referenztiefenkarte zu bilden.

3. Stereokamera (10) nach Anspruch 1 oder 2,
wobei die Prüfeinheit (28) dafür ausgebildet ist, als statistisches Maß einen Mittelwert, einen Median oder ein anderes Quantil zu bilden, insbesondere aus Bildpunkten der Differenzkarte.

4. Stereokamera (10) nach einem der vorhergehenden Ansprüche,
die einen Sicherheitsausgang (34) aufweist, wobei die Prüfeinheit (28) dafür ausgebildet ist, über den Sicherheitsausgang (34) ein Absicherungssignal auszugeben, wenn die Funktionsfähigkeit eines Bildsensors (16a-b) nicht gegeben ist.

5. Stereokamera (10) nach einem der vorhergehenden Ansprüche,
wobei die Prüfeinheit (28) dafür ausgebildet ist, nur Abweichungen des statistischen Maßes hin zu größeren Abständen von der Stereokamera (10) als Fehler zu erkennen.

6. Stereokamera (10) nach einem der vorhergehenden Ansprüche,
wobei die Prüfeinheit (28) dafür ausgebildet ist, das statistische Maß mit einem Schwellwert zu vergleichen.

7. Stereokamera (10) nach einem der vorhergehenden Ansprüche,
wobei die Prüfeinheit (28) dafür ausgebildet ist, das statistische Maß über mehrere nacheinander aufgenommene Tiefenkarten zu bilden.

8. Stereokamera (10) nach einem der vorhergehenden Ansprüche,
wobei die Auswertungseinheit (24) dafür ausgebildet ist, die Referenztiefenkarte aus mehreren Aufnahmen zu erzeugen.

9. Stereokamera (10) nach einem der vorhergehenden Ansprüche,
wobei die Prüfeinheit (28) dafür ausgebildet ist, für das statistische Maß Bildpunkte nicht zu berücksichtigen, die einem Vordergrundobjekt (32) zugeordnet werden.

10. Stereokamera (10) nach einem der vorhergehenden Ansprüche,
wobei die Prüfeinheit (28) dafür ausgebildet ist, das statistische Maß jeweils über eine Spalte von Bildpunkten oder einen Teilbereich davon zu bilden.

11. Stereokamera (10) nach Anspruch 10,
wobei die Prüfeinheit (28) dafür ausgebildet ist, je Spalte von Bildpunkten die gültigen Bildpunkte zu zählen und deren Tiefenwert aufzuaddieren.

12. Stereokamera (10) nach Anspruch 10 oder 11,
wobei die Prüfeinheit (28) dafür ausgebildet ist, einen Fehler zu erkennen, wenn die Anzahl gültiger Bildpunkte in einer Spalte zu klein ist.

13. Verfahren zum Prüfen der Funktionsfähigkeit der Bildsensoren (16a-b) einer sicheren Stereokamera (10) zur Überwachung eines Überwachungsbereichs (12), wobei sicher bedeutet, dass alle funktionswesentlichen Komponenten gemäß einem spezifizierten Sicherheitsniveau ausfallsicher sind oder deren Fehlfunktion erkannt wird, wobei die Stereokamera (10) mit einem ersten Bildsensor (16a) ein erstes zweidimensionales Bild und mit einem zweiten Bildsensor (16b) ein zweites zweidimensionales Bild eines Überwachungsbereichs (12) aus gegeneinander versetzter Perspektive aufnimmt und aus den beiden zweidimensionalen Bildern mit einem stereoskopischen Verfahren eine Tiefenkarte erzeugt, wobei vorab in einer Einlernphase der Hintergrund des Überwachungsbereichs aufgenommen und so eine Referenztiefenkarte des Überwachungsbereichs (12) erzeugt und im Betrieb eine aufgenommene Tiefenkarte mit der Referenztiefenkarte verglichen wird, und wobei die Funktionsfähigkeit der Bildsensoren (16a-b) durch Aufdecken von Adressdecoderfehlern und weiteren Fehlern der Bildsensoren überprüft wird,
**dadurch gekennzeichnet,**
**dass** zum Prüfen der Funktionsfähigkeit der Bildsensoren (16a-b) ein statistisches Maß über Abweichungen von Bildpunkten der Tiefenkarte zu der Referenzkarte bestimmt wird und anhand einer Abweichung des Mittelwerts von einem Referenzwert ein Adressdecoderfehler und weitere Fehler in einem Bildsensor (16a-b) erkannt werden

14. Verfahren nach Anspruch 13,
wobei eine Differenztiefenkarte aus der aufgenommenen Tiefenkarte und der Referenztiefenkarte gebildet wird.

15. Verfahren nach Anspruch 13 oder 14,
wobei als statistisches Maß ein Mittelwert, ein Median oder ein anderes Quantil gebildet wird, insbesondere aus Bildpunkten der Differenzkarte.

## Claims

1. A safe stereo camera (10) for monitoring a monitoring area (12), wherein safe means that all functionally essential components are fail-safe according to a specified safety level or their malfunction is detected, wherein the stereo camera (10) comprises at least a first image sensor (16a) for taking a first two-dimensional image and a second image sensor (16b) for taking a second two-dimensional image of the monitoring area (12) from a perspective offset from each other, a stereoscopy unit (26) for generating a depth map from two-dimensional images according to the stereoscopic principle, an evaluation unit (24) for processing depth maps and a test unit (28) for testing the operability of the image sensors (16a-b) by detecting address decoder errors and further errors of the image sensors, wherein the evaluation unit (24) is configured to detect the background of the monitored area in advance in a teach-in phase and thus to generate a reference depth map of the monitoring area (12) and to compare a detected depth map with the reference depth map during operation, **characterized in that** the test unit (28) is configured to determine a statistical measure of deviations of pixels of the depth map from the reference map and to detect an address decoder error and further errors in an image sensor (16a-b) on the basis of a deviation of the statistical measure from a reference value.

2. The stereo camera (10) according to claim 1,
wherein the evaluation unit (24) is configured to form a difference depth map from the detected depth map and the reference depth map.

3. The stereo camera (10) according to claim 1 or 2,
wherein the test unit (28) is configured to form an average value, a median or another quantile as a statistical measure, in particular from pixels of the difference map.

4. The stereo camera (10) according to one of the preceding claims,
which has a safety output (34), the test unit (28) being configured to output a safety signal via the safety output (34) if the operability of an image sensor (16a-b) is not confirmed.

5. The stereo camera (10) according to one of the preceding claims,
wherein the test unit (28) is configured to detect only deviations of the statistical measure towards greater distances from the stereo camera (10) as faults.

6. The stereo camera (10) according to one of the previous claims,
wherein the test unit (28) is configured to compare the statistical measure with a threshold value.

7. The stereo camera (10) according to one of the previous claims,
wherein the test unit (28) is configured to form the statistical measure over a plurality of successively detected depth maps.

8. The stereo camera (10) according to one of the preceding claims,
wherein the evaluation unit (24) is configured to generate the reference depth map from a plurality of images.

9. The stereo camera (10) according to one of the previous claims,
wherein the test unit (28) is configured to disregard pixels assigned to a foreground object (32) for the statistical measurement.

10. The stereo camera (10) according to one of the previous claims,
wherein the test unit (28) is configured to form the statistical measure over a column of pixels or a sub region thereof.

11. The stereo camera (10) according to claim 10,
wherein the test unit (28) is configured to count the valid pixels per column of pixels and to add up their depth value.

12. The stereo camera (10) according to claim 10 or 11,
wherein the test unit (28) is configured to detect an error if the number of valid pixels in a column is too small.

13. A method for testing the operability of the image sensors (16a-b) of a safe stereo camera (10) for monitoring a monitoring area (12), wherein safe means that all functionally essential components are fail-safe according to a specified safety level or their malfunction is detected, wherein the stereo camera (10) takes a first two-dimensional image of a monitoring area (12) with a first image sensor (16a) and a second two-dimensional image of the monitoring area (12) with a second image sensor (16b) from mutually offset perspective and generates a depth map from the two two-dimensional images using a stereoscopic method, wherein the background of the monitored area is detected in advance in a teach-in phase and thus a reference depth map of the monitoring area (12) is generated and, in operation, a detected depth map is compared with the reference depth map, and wherein the operability of the image sensors (16a-b) is tested by detecting address decoder errors and further errors of the image sensors,
**characterized in that**, in order to check the operability of the image sensors (16a-b), a statistical measure of deviations of pixels of the depth map from the reference map is determined and an address decoder error and further errors in an image sensor (16a-b) are detected on the basis of a deviation of the mean value from a reference value.

14. The method according to claim 13,
wherein a difference depth map is formed from the detected depth map and the reference depth map.

15. The method according to claim 13 or 14,
wherein an average value, a median or another quantile is formed as a statistical measure, in particular from pixels of the difference map.

## Revendications

1. Caméra stéréo sécurisée (10) pour surveiller une zone à surveiller (12), sécurisée signifiant que tous les composants essentiels du point de vue fonctionnel sont à sécurité intégrée conformément à un niveau de sécurité défini ou dont le dysfonctionnement est détecté, la caméra stéréo (10) comprenant au moins un premier capteur d'images (16a) pour enregistrer une première image bidimensionnelle et un second capteur d'images (16b) pour enregistrer une seconde image bidimensionnelle de la zone à surveiller (12) depuis une perspective mutuellement décalée, une unité de stéréoscopie (26) pour générer une carte de profondeur à partir d'images bidimensionnelles selon le principe stéréoscopique, une unité d'évaluation (24) pour traiter des cartes de profondeur, et une unité de test (28) pour vérifier l'aptitude au fonctionnement des capteurs d'images (16a - b) par la détection d'erreurs de décodage d'adresse et d'autres erreurs des capteurs d'images, l'unité d'évaluation (24) étant réalisée pour enregistrer préalablement l'arrière-plan de la zone à surveiller lors d'une phase d'apprentissage et pour générer ainsi une carte de profondeur de référence de la zone à surveiller (12) et pour comparer une carte de profondeur enregistrée avec la carte de profondeur de référence, pendant le fonctionnement,
**caractérisée en ce que**
l'unité de test (28) est réalisée pour déterminer une mesure statistique relative à des écarts de pixels de la carte de profondeur par rapport à la carte de référence et pour détecter une erreur de décodage d'adresse et d'autres erreurs dans un capteur d'images (16a - b) sur la base d'un écart de la mesure statistique par rapport à une valeur de référence.

2. Caméra stéréo (10) selon la revendication 1,
dans laquelle
l'unité d'évaluation (24) est conçue pour former une carte de profondeur différentielle à partir de la carte de profondeur enregistrée et de la carte de profondeur de référence.

3. Caméra stéréo (10) selon la revendication 1 ou 2,
dans laquelle
l'unité de test (28) est réalisée pour former une valeur moyenne, une médiane ou un autre quantile comme mesure statistique, en particulier à partir de pixels de la carte différentielle.

4. Caméra stéréo (10) selon l'une des revendications précédentes, comprenant une sortie de sécurité (34), l'unité de test (28) étant réalisée pour émettre un signal de sécurité via la sortie de sécurité (34) si l'aptitude au fonctionnement d'un capteur d'images (16a - b) n'est pas donnée.

5. Caméra stéréo (10) selon l'une des revendications précédentes,
dans laquelle
l'unité de test (28) est réalisée pour détecter comme erreurs uniquement les écarts de la mesure statistique vers des distances plus grandes par rapport à la caméra stéréo (10).

6. Caméra stéréo (10) selon l'une des revendications précédentes,
dans laquelle
l'unité de test (28) est réalisée pour comparer la mesure statistique avec une valeur seuil.

7. Caméra stéréo (10) selon l'une des revendications précédentes,
dans laquelle
l'unité de test (28) est réalisée pour former la mesure statistique sur plusieurs cartes de profondeur enregistrées successivement.

8. Caméra stéréo (10) selon l'une des revendications précédentes,
dans laquelle
l'unité d'évaluation (24) est réalisée pour générer la carte de profondeur de référence à partir d'une pluralité d'enregistrements.

9. Caméra stéréo (10) selon l'une des revendications précédentes,
dans laquelle
l'unité de test (28) est réalisée pour ne pas prendre en compte les pixels pour la mesure statistique qui sont attribués à un objet de premier plan (32).

10. Caméra stéréo (10) selon l'une des revendications précédentes,
dans laquelle
l'unité de test (28) est réalisée pour former la mesure statistique respectivement sur une colonne de pixels ou sur une zone partielle de ceux-ci.

11. Caméra stéréo (10) selon la revendication 10,
dans laquelle
l'unité de test (28) est réalisée pour compter les pixels valides par colonne de pixels et pour additionner leur valeur de profondeur.

12. Caméra stéréo (10) selon la revendication 10 ou 11,
dans laquelle
l'unité de test (28) est réalisée pour détecter une erreur si le nombre de pixels valides dans une colonne est trop petit.

13. Procédé pour vérifier l'aptitude au fonctionnement des capteurs d'images (16a - b) d'une caméra stéréo sécurisée (10) pour surveiller une zone à surveiller (12), sécurisée signifiant que tous les composants essentiels du point de vue fonctionnel sont à sécurité intégrée conformément à un niveau de sécurité défini ou dont le dysfonctionnement est détecté, la caméra stéréo (10) enregistrant une première image bidimensionnelle par un premier capteur d'images (16a) et une seconde image bidimensionnelle d'une zone à surveiller (12) par un second capteur d'images (16b) depuis une perspective mutuellement décalée, et générant une carte de profondeur à partir des deux images bidimensionnelles en utilisant un procédé stéréoscopique, dans lequel
préalablement l'arrière-plan de la zone à surveiller est enregistré lors d'une phase d'apprentissage et ainsi une carte de profondeur de référence de la zone à surveiller (12) est générée, et
une carte de profondeur enregistrée est comparée avec la carte de profondeur de référence, pendant le fonctionnement, et
l'aptitude au fonctionnement des capteurs d'images (16a - b) est vérifiée par détection d'erreurs de décodage d'adresse et d'autres erreurs des capteurs d'image,
**caractérisé en ce que**
pour vérifier l'aptitude au fonctionnement des capteurs d'images (16a - b), une mesure statistique relative à des écarts de pixels de la carte de profondeur par rapport à la carte de référence est déterminée et une erreur de décodage d'adresse et d'autres erreurs dans un capteur d'images (16a - b) sont détectés sur la base d'un écart de la valeur moyenne par rapport à une valeur de référence.

14. Procédé selon la revendication 13,
dans lequel
une carte de profondeur différentielle est formée à partir de la carte de profondeur enregistrée et de la carte de profondeur de référence.

15. Procédé selon la revendication 13 ou 14,
dans lequel
une valeur moyenne, une médiane ou un autre quantile est formé(e) comme mesure statistique, en particulier à partir de pixels de la carte différentielle.
